# EUROPEAN PATENT SPECIFICATION

(11) **EP 2 497 990 B1**
(45) Date of publication and mention of the grant of the patent: **09.10.2013**
(21) Application number: 11157607.0
(22) Date of filing: 10.03.2011
(51) Int. Cl.: F16L 33/08

(54) **Hose clamp**
Schlauchklemme
Collier de tuyau

(43) Date of publication of application: 12.09.2012
(73) Proprietor: Donga Metal Co., Ltd., Waegwan-eup Chilgok-gun, Gyeongbuk (KR)
(72) Inventor: Chung, Han Il, Daegu (KR); Cho, Cheong Yong, Gyeonggi-do (KR); Bae, Dae Jin, Daegu (KR); Kim, Jin Woo, Daegu (KR); Jeon, Da Hae, Daegu (KR)
(74) Representative: Misselbrook, Paul

(56) References cited:
- WO-A1-2007/016143
- US-A- 4 308 648
- US-A1- 2002 060 453

## Description

### BACKGROUND OF THE INVENTION

### 1. Field of the invention

The present invention relates to a hose clamp.

### 2. Description of the Prior Art

In general, a hose clamp has been used to restrain a hose not to be disengaged when transferring a fluid or a gas in a brake, an air conditioning system, a power steering or an engine room of a vehicle, or when delivering a fluid or a gas in industrial workplaces.

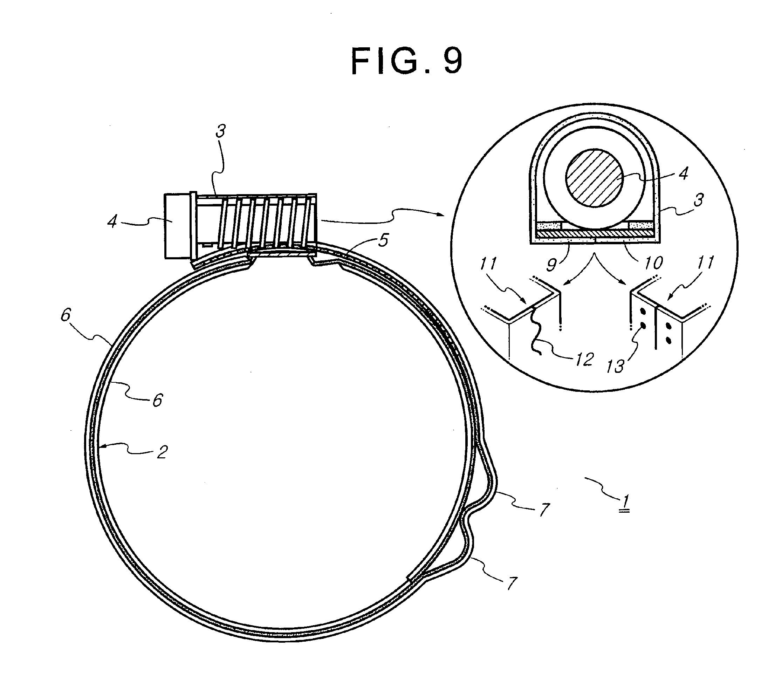

A variety of hose clamps have been employed in the prior art. As an example, the applicant of the present invention has developed a hose clamp and filed the same as a Korean patent application No. 2010-55553. This hose clamp has a compensation function to compensate for a diameter change of the hose so that its securing or fastening force is not lost when there is a diameter change in the hose due to aging from a long-term service. The hose clamp as such will be described hereinbelow with reference to Fig. 9.

A conventional hose clamp 1 having a compensation function is provided with a clamp body 2 which is bent in a circular shape using a plate-shaped member of a stainless steel material. A fastening screw 4 is coupled to a fastening housing 3 secured to one end of the clamp body 2.

The fastening screw 4 is coupled with a plurality of screw holes 5, which are formed inwards at the other end of the clamp body 2 to reduce the diameter of the clamp body 2. A damage prevention means 6 is formed at the widthwise edges of the clamp body 2 to prevent the edges from penetrating into the hose to damage the same during a restraining operation.

A compensation means 7 is provided at the clamp body 2 to restrain and firmly fasten the hose with elasticity in an amount created when the hose diameter is reduced due to the long-term use thereof. The compensation means 7 is composed of a semicircular-shaped compensation bead 7 formed in a circumferential direction of the clamp body 2 at a location where the screw hole 5 ends, wherein the compensation bead 7 is extended when the hose is restrained and performs the compensation function by its restoring force when the hose is aged.

In the conventional hose clamp as described above, since the fastening housing cannot stand the fastening force applied to the clamp body during the hose fastening operation and is damaged or deformed to make the hose clamp unusable, the durability and quality of the hose clamp is deteriorated so that the hose clamp is unpopular in the workplace and becomes the cause of lowering the competitiveness.

The fastening housing 3 employed with the prior art is bent with a plate-shaped member in a form to enclose the fastening screw 4, and the opposite ends 9 and 10 of the fastening housing 3 are covering the clamp body 2, which allows an abutting portion 11 to be positioned at the bottom center of the clamp body 2.

Meanwhile, the abutting portion 11 has drawbacks in that even though it is formed by joining itself in a wavy or zipper type 12 or joined by a spot welding 13 after abutting itself in a straight line, it cannot sustain the fastening force. Hence the abutting portion 11 is deformed or diverged, which makes it impossible to fasten the hose in a stable state.

This is because the fastening force generated when the clamp body is restrained by the fastening screw is transmitted to the abutting portion and acts in a pattern of pressing upon the same, so that the load is concentrated on the abutting portion which has been separated to be weak. Therefore, the abutting portion is easily deformed or damaged accordingly.

Further, the compensation function is performed by the semicircular compensation bead on the clamp body. When the hose is restrained at the beginning and the compensation bead is deformed (in an extending pattern), the compensation bead experiences a plastic deformation in a state until it cannot hold its elasticity. Hence, when the compensation bead is aged later, it has no elasticity, which becomes a cause not to restrain and fasten the hose effectively in the end.

In other words, since there is no means to limit or warn that the compensation bead has experienced the plastic deformation beyond an elastic limit when the hose is restrained, a user has to restrain the hose only by visually checking the deformation state of the compensation bead. Therefore, the user cannot recognize the state that the compensation bead has been plastically deformed even when the compensation bead is spread out from the semicircular shape to the flat shape.

Hence, there does not arise any big problem at the initial period of the restraining of the hose. However, even though the diameter of the hose is changed or reduced as the hose has been used over the long period of time, the compensation bead fails to generate a force to restore itself to its original state (in a semicircular shape) by the elasticity. As a result, there arise situations that the restraining force of the hose clamp is lowered and the fluid transferred through the hose is leaked, which makes it difficult to provide the fluid through the hose in a stable manner.

In addition, even in the case that the fluid leaks out of the hose, since the compensation bead loses its function due to the plastic deformation thereof, not performing its normal function, it causes various problems to deteriorate the durability and quality of the hose clamp or the like.

US 4308648 represents the preamble of claim 1 and discloses a hose clamp including an open ended band, the ends of which overlap each other to vary the diameter thereof. Associated with the band are means which is yieldable in a direction circumferentially of the band, the means having a spring-like action such that the band is self-adjusting to compensate for thermal expansion and aging.

### SUMMARY OF THE INVENTION

It is an aim of the invention to provide a hose clamp in which a compensation means is capable of preventing a plastic deformation thereof during a fastening operation as well as a deformation of a housing of the hose clamp, while maintaining a fastening force even when the diameter of the hose is reduced due to aging by long-term use.

Accordingly, the present invention has been made to solve the above-mentioned problems occurring in the prior art, and an object of the present invention is to provide a hose clamp including a clamp body formed by bending a resilient plate-shaped member of stainless steel, a fastening screw having a head and coupled with a fastening housing which is secured to one end of the clamp body, a plurality of screw holes formed inwards at the other end of the clamp body to be engaged with the fastening screw, and a compensation bead integrally formed with the clamp body for restraining and firmly fastening the hose in an amount being reduced as the diameter of the hose is decreased due to long-term use, wherein the compensation bead further includes a plastic deformation prevention means to prevent the compensation bead from not being restored to its original state due to loss of its elasticity by a plastic deformation, wherein the plastic deformation prevention means is provided with a prevention body contacting the inner surface of the clamp body formed with the compensation bead, wherein one end of the prevention body is secured to the clamp body through a securing means, wherein stopper pins are provided in the same number as that of the compensation beads at the opposite location of the prevention body fixed through the securing means, and wherein the stopper pins are coupled with stopper holes formed between the neighboring compensation beads to limit the plastic deformation of the compensation beads. Hence, the hose clamp of the present invention can efficiently perform a compensation function when the hose becomes aged due to a long-term service, thereby preserving a sufficient fastening force and preventing the damage and deformation of the fastening housing.

Therefore, it should be appreciated that the hose clamp of the present invention can achieve its basic object to increase the fastening force of the hose in which the structure of the fastening housing to constitute the hose clamp is improved to sustain the fastening force, so as to prevent itself from being deformed or damaged and the compensation bead from experiencing the plastic deformation. In addition, the present hose clamp can quickly restrain the hose with the restoring force of the compensation bead in a stable state to prevent the leak of the fluid when the hose becomes aged, thereby enhancing the durability and quality of the hose clamp.

### BRIEF DESCRIPTION OF THE DRAWINGS

The above and other objects, features and advantages of the present invention will be more apparent from the following detailed description taken in conjunction with the accompanying drawings, in which:
Fig. 1 is a perspective view illustrating a hose clamp in accordance with the present invention;
Fig. 2 is a cross-sectional view taken along line A-A in Fig. 1;
Fig. 3 is a partially enlarged cross-sectional view illustrating a plastic deformation prevention means of the hose clamp in accordance with the present invention;
Fig. 4 is a partially enlarged cross-sectional view illustrating the operational state of the plastic deformation prevention means of the hose clamp in accordance with the present invention;
Fig. 5 is a perspective view illustrating a first embodiment of a fastening housing of the hose clamp in accordance with the present invention;
Fig. 6 is a cross-sectional view taken along line B-B in Fig. 5;
Fig. 7 is a perspective view illustrating a second embodiment of a fastening housing of the hose clamp in accordance with the present invention;
Fig. 8 is a cross-sectional view taken along line C-C in Fig. 7; and
Fig. 9 is a schematic view illustrating the conventional hose clamp.

### DETAILED DESCRIPTION OF EMBODIMENTS OF THE PRESENT

### INVENTION

Hereinafter, a preferred embodiment of the present invention will be described with reference to the accompanying drawings.

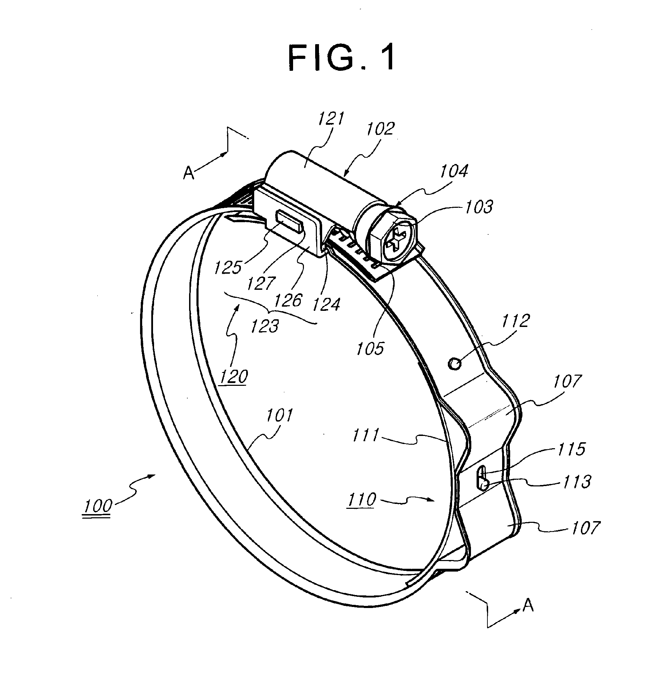

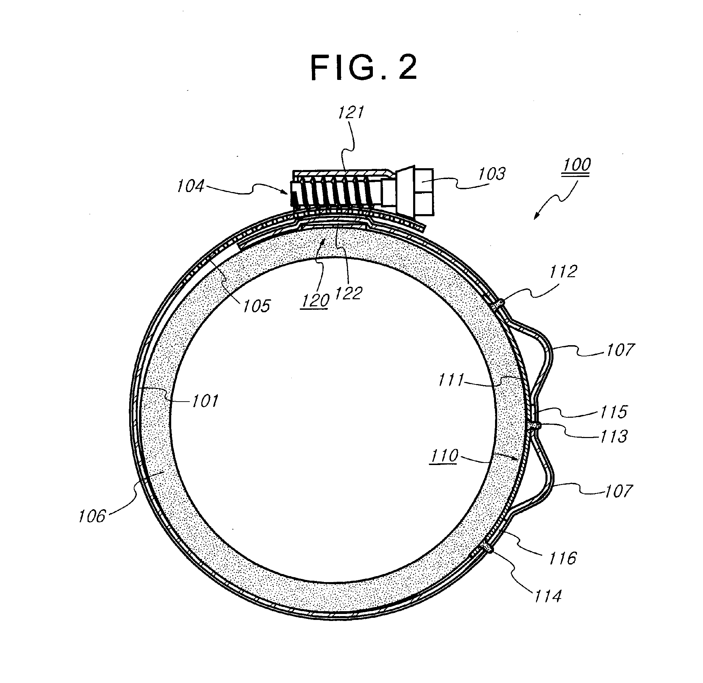

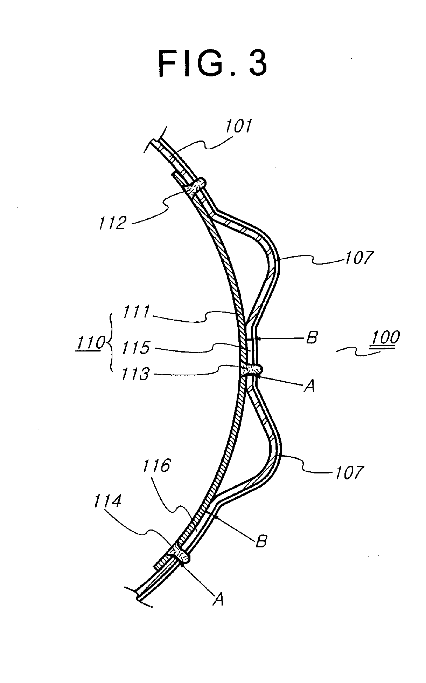

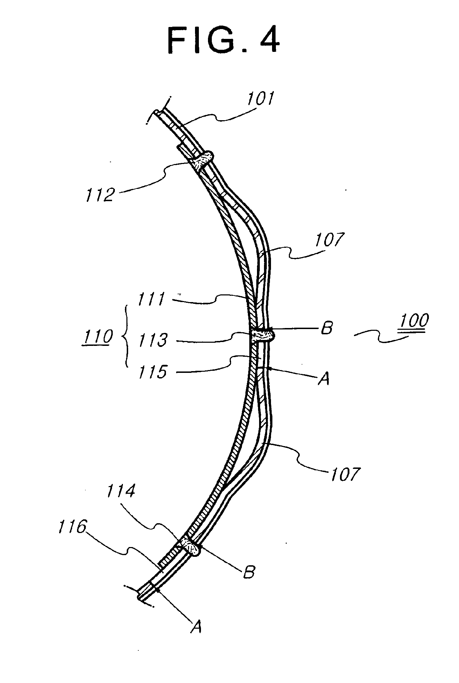

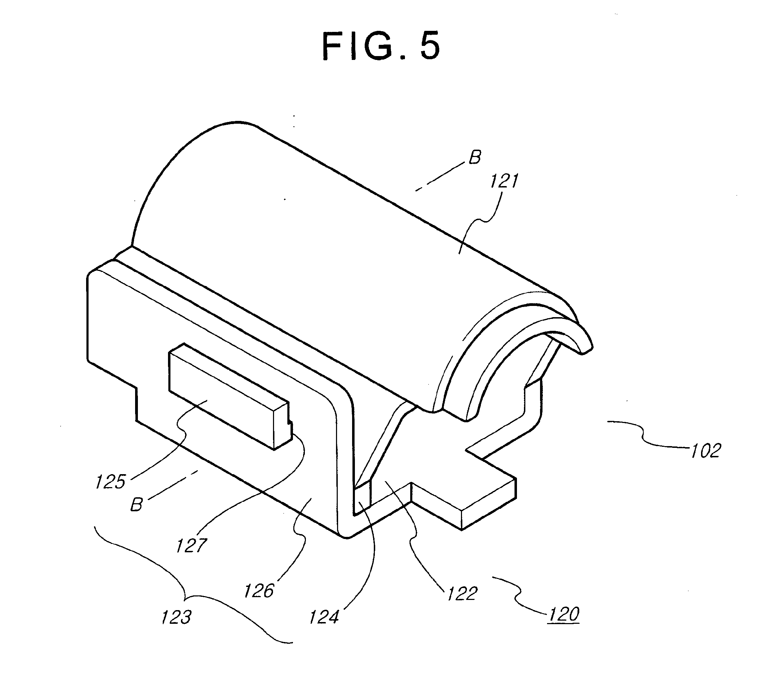

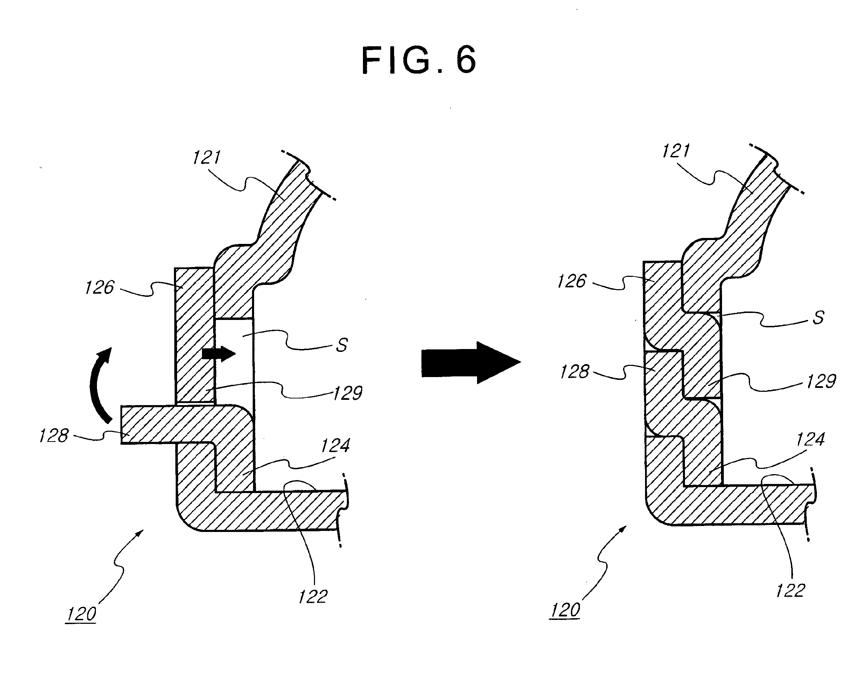

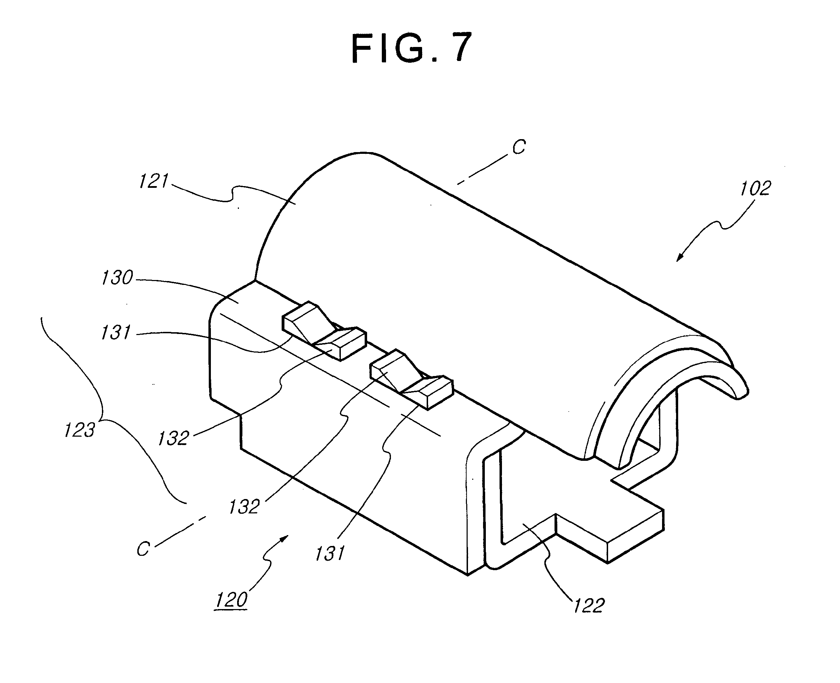

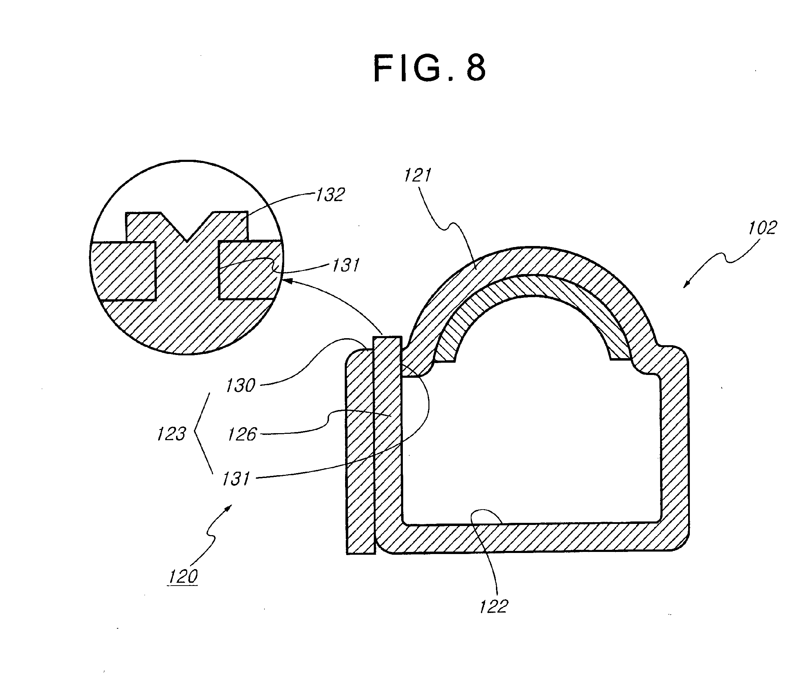

Fig. 1 is a perspective view illustrating a hose clamp in accordance with the present invention, Fig. 2 is a cross-sectional view taken along line A-A in Fig. 1, Fig. 3 is a partially enlarged cross-sectional view illustrating a plastic deformation prevention means of the hose clamp in accordance with the present invention, Fig. 4 is a partially enlarged cross-sectional view illustrating the operational state of the plastic deformation prevention means of the hose clamp in accordance with the present invention, Fig. 5 is a perspective view illustrating a first embodiment of a fastening housing of the hose clamp in accordance with the present invention, Fig. 6 is a cross-sectional view taken along line B-B in Fig. 5, Fig. 7 is a perspective view illustrating a second embodiment of a fastening housing of the hose clamp in accordance with the present invention, and Fig. 8 is a cross-sectional view taken along line C-C in Fig. 7.

In general, a hose clamp 100 is provided with a clamp body 101 which is formed by bending a resilient plate-shaped member of stainless steel in a circular pattern with a certain width. A fastening housing 102 is secured to one end of the clamp body 101, and a fastening screw 104 with a head 103 for using a tool (not shown) by a user is coupled within the fastening housing 102.

The fastening screw 104 is engaged with a plurality of screw holes 105 formed inwards in a certain length at the other end of the clamp body 101, so that the fastening screw 104 is rotated by the user in a clockwise or counterclockwise direction to pull or push the clamp body 101 through the screw holes 105, thereby increasing or decreasing the diameter of the clamp body 101.

It is obvious that the diameter of the clamp body 101 formed with the screw holes 105 should be maximized to facilitate the coupling of a hose 106 to be fastened, while the diameter of the clamp body 101 should be minimized to firmly fasten and restrain the hose 106.

The clamp body 101 is constructed to be formed with one or more resilient compensation beads 107 with a semicircular shape at one location thereof, in which the compensation beads are restored by the elastic force in an amount being reduced as the diameter of the hose 106 is decreased due to long-term use so as to restrain and fasten the hose 106 in a firm state.

The present invention has features in that a plastic deformation prevention means 110 is further provided in order to prevent the compensation bead 107 from not being restored to its original state due to loss of the elasticity according to the plastic deformation, and a fastening means 120 for the fastening housing 102 is improved to prevent the hose 106 from being deformed or damaged by the fastening force created when the hose 106 is restrained.

The plastic deformation prevention means 110 includes a prevention body 111 formed with a circular shape in a plate-shaped material contacting the inner surface of the clamp body 101 having the compensation bead 107. The one end of the prevention body 111 (in a direction pulled by the fastening screw) is secured to the clamp body 101 through a securing means, such as a pin, a rivet, a welding or an embossing or the like integrally formed at the prevention body 111.

Preferably, the width of the prevention body 111 is the same as that of the clamp body 101, while the length of prevention body 111 is longer than that of the compensation bead 107 formed at the clamp body 101 when the entire compensation bead 107 is spread out to the extent not to be plastically deformed.

Stopper pins 113 and 114 are provided at the opposite location of the prevention body 111 fixed to the clamp body 102 through the securing means 112. At this point, the number of the stopper pins 113 and 114 is the same as that of the compensation beads 107 formed at the clamp body 101. The stopper pins 113 and 114 are designed to be coupled with stopper holes 115 and 116 formed between the neighboring compensation beads 107.

Here, it is obvious that the stopper holes 115 and 116 are in the form of elongated holes, so as not to hinder the extending operation of the compensation beads 107 when the clamp body 101 fastens the hose 106.

The dimension of the stopper holes 115 and 116 is configured such that the first stopper hole 115 has the same length as the distance where the first compensation bead 107 is spread out to the extent not to experience the plastic deformation, while the second stopper hole 116 is formed to have the same length as the sum of the distances in which both the first and the second compensation beads 107 are respectively extended to the extent not to have the plastic deformation.

At this moment, it should be appreciated that when the number of the compensation bead 107 is increased, the length of the stopper holes 115 and 116 is determined by adding each distance where the increased compensation beads 107 are spread out to the extent not to experience the plastic deformation.

The fastening means 120 for securing the fastening housing 102 is composed of a housing body 121 which is bent with a plate-shaped material. A fastening surface 122 to be secured to the clamp body 101 is formed in a seamless pattern, so as not to deform or damage the hose 106 against the fastening force.

A restraining part 123 for restraining the housing body 121 is provided with a restraining protrusion 125 projecting outwards at the center of a downward end portion 124 which is bent downward from the upper side of the housing body 121, and a restraining recess 127 formed at the center of an upward end portion 126 which is bent upward at the end of the fastening surface 122.

When the distal end 128 of the restraining protrusion 125, which is exposed into the restraining recess 127, is bent upward and compressed thereto, the lower end 129 of the restraining recess 127 is pushed into a space S created by formation of the restraining protrusion 125. Further, the distal end 128 makes a close contact with the outer side of the lower end 129 of the restraining recess 127, so that the downward end portion 124 can maintain a unitary shape with the upward end portion 126 to respond to the fastening force.

Operation of the hose clamp 100 in accordance with the present invention will be described hereinafter.

When the fastening screw 104 coupled with the fastening housing 102 is rotated in one (release) direction using a tool, such as a screw driver or the like, the diameter of the clamp body 101 is increased to receive the hose 106 therein. After that, the fastening screw 104 is rotated in the other (restraint) direction to restrain and fasten the hose 106.

During this operation, the fastening screw 104 is engaged with the screw holes 105 formed at the clamp body 101 to increase or decrease the diameter of the clamp body 101.

When the hose 106 is fastened to be restrained, the compensation beads 107 formed in the semicircular shape at the clamp body 101 are spread out in a perpendicular direction, i.e., peripheral direction of the hose 106, with respect to the center of the hose 106 by the fastening force, exerting the fastening force thereto by its elasticity.

In a state where the hose 106 is firmly fastened as such, when the hose 106 becomes aged due to a long period of time in service and its diameter is reduced, the compensation beads 107 formed at the clamp body 101 adjacent to the prevention body 111 generate forces to restore themselves to their original states. Therefore, the diameter of the clamp body 101 is reduced due to such forces of the compensating beads 107, thereby performing the compensation function corresponding to the diameter of the clamp body 101 being reduced.

As described in the above, it should be appreciated that the compensation beads 107 are spread out from the semicircular shape to the flat shape during a fastening operation of the hose 106. During this operation, a situation in which the compensation beads 107 are fully extended to be plastically deformed and cannot be restored to their original states is prevented by the plastic deformation prevention means 110.

In other words, the stopper pins 113 and 114 formed at the prevention body 111, which is secured to the clamp body 101 through the securing means 112, are designed to be coupled with the stopper holes 115 and 116 formed between the neighboring compensation beads 107, which makes it possible to stop the further extension of the compensation beads 107 before the compensation beads 107 start to be plastically deformed.

That is, when the clamp body 101 is tensioned, the compensation beads 107 are also tensioned and spread out. Hence, when the compensation beads 107 are extended, the stopper pins 113 and 114 engaged with the stopper holes 115 and 116, which are formed at the outer side (in a pulling direction) of the compensation beads 107, are moved from a point A to a point B of the stopper holes 115 and 116.

Such a movement of the stopper pins 113 and 114 is possible since the stopper holes 115 and 116 are formed in an elongated shape. Here, the length of the stopper holes 115 and 116 is formed in the same length as the distance where the compensation beads 107 can be extended without the plastic deformation. Therefore, when the stopper pins 113 and 114 are displaced from the point A to the point B, further extension of the compensation beads 107 is prevented, thereby finally preventing the plastic deformation of the compensation beads 107.

Particularly, in the case that there are one or more compensation beads 107, after the first compensation bead 107 is completely spread out just before the time of the plastic deformation, in turn, the next compensation bead 107 may be operated to be extended accordingly. However, it is possible for a plurality of compensation beads 107 to operate in a pattern to be spread out simultaneously.

Where multiple compensation beads 107 are provided, the length of the stopper holes 115 and 116 has to be formed in the same length as the sum of the length in which the preceding compensation beads 107 can be extended without the plastic deformation as the compensation bead 107 locates farther from the securing means 112. Consequently, the stopper holes 115 and 116 are formed in turn with a longer length, respectively, which does not cause any trouble for the stopper pins 113 and 114 to play their roles.

Further, since the fastening means 120 for securing the fastening housing 102 is composed of the restraining part 123 at any one lateral side constituting the housing body 121, and the fastening surface 122 to be closely secured to the clamp body 101 is formed in a seamless (without abutting portion) pattern, the hose 106 is not deformed or damaged in response to the fastening force transferred from the clamp body 101.

In the case of the restraining part 123, its concrete coupled state can be maintained by engaging the restraining protrusion 125 with the restraining recess 127 at any one lateral side of the housing body 121 and by bending or caulking the restraining protrusion 125 not to be disengaged. In addition, it is possible to prevent the restraining part 123 from being easily damaged or deformed since the fastening force is not directly transferred thereto.

In other words, when the clamp body 101 is restrained using the fastening screw 104, the upward end portion 126 constituting the fastening housing 102 creates a force to move downward, while the downward end portion 124 generates a force to move upward. Consequently, the restraining part 123 cannot stand, in general, to be diverged accordingly.

However, in the present invention, since the distal end 128 of the restraining protrusion 125 exposed into the restraining recess 127 is bent upward and compressed thereto, the lower end 129 of the restraining recess 127 is pushed into the space S created by the formation of the restraining protrusion 125. In addition, the distal end 128 is closely in contact with the outer side of the lower end 129, and the downward and upward end portions 124 and 126 maintain a unitary shape to form an engagement coupling therebetween, which makes it possible to respond to the fastening force generated by the fastening screw 104.

In addition, since the surface of the restraining part 123 coincides with the outer surface of the upward end portion 126 without any projections, there arises no interference with the surroundings and no damage to the body or hand of the user during the operation.

As an alternative example for the securing means 120, as shown in Fig. 8, restraining recesses 131 are provided at a horizontal portion 130 which is further formed before a downward bending at the upper side of the housing body 121. Restraining protrusions 132 are formed at the upper end of the upward end portion 126 to be coupled with the restraining recesses 131, in which the restraining protrusions 132 are caulked not to be disengaged.

It should be noted that the hose clamp of the present invention as described above has advantages in that it can prevent the compensation beads from being plastically deformed during a fastening operation of the hose, and efficiently perform a compensation function when the hose becomes aged due to a long-term service, thereby preserving a sufficient fastening force and preventing the damage and deformation of the fastening housing.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A hose clamp (100) comprising:
a clamp body (101) formed by bending a resilient plate-shaped member of a stainless steel material;
a fastening screw (104) having a head (103) and coupled with a fastening housing (102) which is secured to one end of the clamp body (101);
a plurality of screw holes (105) formed inwards at the other end of the clamp body (101) to be engaged with the fastening screw (104); and
a compensation bead (107) integrally formed with the clamp body (101) for restraining and firmly fastening a hose (106) in an amount being reduced as the diameter of the hose (106) is decreased due to long-term use,
wherein the compensation bead (107) further includes a plastic deformation prevention means (110) to prevent the compensation bead (107) from not being restored to its original state due to loss of its elasticity by a plastic deformation,
the plastic deformation prevention means (110) is provided with a prevention body (111) contacting the inner surface of the clamp body (101) formed with the compensation bead (107),
**characterised in that** one end of the prevention body (111) is secured to the clamp body (101) through a securing means (112),
stopper pins (113,114) are provided in the same number as that of the compensation beads (107) at the opposite location of the prevention body (111) fixed through the securing means (112), and
the stopper pins (113,114) are coupled with stopper holes (115,116) formed between the neighboring compensation beads (107) to limit the plastic deformation of the compensation beads (107) during the fastening operation.

2. The hose clamp as recited in claim 1, wherein the stopper holes (115) and (116) are in the form of the elongated holes, so as not to hinder the extending operation of the compensation bead (107) when the clamp body (101) fastens the hose (106).

3. The hose clamp as recited in claim 1, wherein the dimension of the stopper holes (115) and (116) is configured such that the first stopper hole (115) has the same length as the distance where the first compensation bead (107) is spread out to the extent not to experience the plastic deformation,
the second stopper hole (116) is formed to have the same length as the sum of the distances in which both the first and the second compensation beads (107) are respectively extended to the extent not to have the plastic deformation, and
when the number of the compensation bead (107) is increased, the length of the stopper holes (115) and (116) is determined by adding each distance where the increased compensation beads (107) are spread out to the extent not to experience the plastic deformation.

4. The hose clamp (100) as claimed in claim 1, wherein:
the fastening housing (102) further includes a fastening means (120) for preventing the hose (106) from being deformed or damaged by the fastening force created when the hose (106) is restrained,
the fastening means (120) is provided with a housing body (121) bent for receiving the fastening screw (104),
a fastening surface (122) to be secured to the clamp body (101) at the lower side of the housing body (121) is formed in a seamless pattern so as not to deform or damage the hose (106) against the fastening force,
a restraining part (123) for restraining the housing body (121) is provided with a restraining protrusion (125) projecting outwards at the center of a downward end portion (124) which is bent downward from the upper side of the housing body (121), and a restraining recess (127) formed at the center of an upward end portion (126) which is bent upward at the end of the fastening surface (122),
the distal end (128) of the restraining protrusion (125) exposed into the restraining recess (127) is bent upward and compressed thereto, and the lower end (129) of the restraining recess (127) is pushed into a space S created by the formation of the restraining protrusion (125), and
the distal end (128) makes a close contact with the outer side of the lower end (129), so that the downward end portion (124) maintains a unitary shape with the upward end portion (126).

5. The hose clamp as recited in claim 4, wherein the fastening means (120) includes restraining recesses (131) provided at a horizontal portion (130) which is further formed before a downward bending at the upper side of the housing body (121), and restraining protrusions (132) formed at the upper end of the upward end portion (126) to be coupled with the restraining recesses (131), and
the restraining protrusions (132) to be exposed into the restraining recesses (131) are caulked not to be disengaged.

## Patentansprüche

1. Schlauchklemme (100), umfassend:
einen Klemmenkörper (101), der durch Biegen eines elastischen plattenförmigen Elements aus einem Edelstahlmaterial gebildet ist;
eine Befestigungsschraube (104), die einen Kopf (103) aufweist und mit einem Befestigungsgehäuse (102) gekoppelt ist, das an einem Ende des Klemmenkörpers (101) befestigt ist;
mehrere Schraubenlöcher (105), die an dem anderen Ende des Klemmenkörpers (101) nach innen gerichtet gebildet sind, um mit der Befestigungsschraube (104) in Eingriff gebracht zu werden; und
einen Ausgleichswulst (107), der einstückig mit dem Klemmenkörper (101) gebildet ist, um einen Schlauch (106) in einem Ausmaß festzuhalten und fest zu befestigen, das verringert wird, während der Durchmesser des Schlauchs (106) infolge einer Langzeitverwendung abnimmt,
wobei der Ausgleichswulst (107) ferner ein Mittel (110) zu r Verhinderung einer plastischen Verformung umfasst, um zu verhindern, dass der Ausgleichswulst (107) infolge eines Verlusts seiner Elastizität durch ei n e plastische Verformung nicht in seinen ursprünglichen Zustand zurückversetzt wird,
wobei das Mittel (110) zur Verhinderung einer plastischen Verformung mit einem Verhinderungskörper (111) versehen ist, der mit der Innenfläche des mit dem Ausgleichswulst (107) ausgeführten Klemmenkörpers (101) in Kontakt tritt,
**dadurch gekennzeichnet, dass** ein Ende des Verhinderungskörpers (111) durch ein Befestigungsmittel (112) an de m Klemmenkörper (101) befestigt ist,
Anschlagstifte (113, 114) in der gleichen Anzahl wie jener der Ausgleichswülste (107) an der entgegengesetzten Stelle de s du r c h das Befestigungsmittel (112) fixierten Verhinderungskörpers (111) bereitgestellt sind, und
d i e Anschlagstifte (113, 114) mit Anschlagöffnungen (115, 116), die zwischen den benachbarten Ausgleichswülsten (107) gebildet sind, gekoppelt sind, um die plastische Verformung d e r Ausgleichswülste (107) während des Befestigungsvorgangs zu begrenzen.

2. Schlauchklemme nach Anspruch 1, wobei die Anschlagöffnungen (115) und (116) die Form von Langlöchern aufweisen, um den Ausdehnungsvorgang des Ausgleichswulsts (107), wenn der Klemmenkörper (101) den Schlauch (106) befestigt, nicht zu behindern.

3. Schlauchklemme nach Anspruch 1, wobei die Abmessung der Anschlagöffnungen (115) und (116) so gestaltet ist, dass die erste Anschlagöffnung (115) die gleiche Länge wie die Strecke aufweist, über die der erste Ausgleichswulst (107) so weit ausgedehnt wird, dass er die plastische Verformung nicht erfährt,
die zweite Anschlagöffnung (116) so gebildet ist, dass sie die gleiche Länge wie die Summe der Strecken aufweist, über die jeweils sowohl der erste als auch der zweite Ausgleichswulst (107) so weit ausgedehnt werden, dass sie keine plastische Verformung aufweisen, und
die Länge der Anschlagöffnungen (115) und (116) b e i ei n e r Vermehrung de r Anzahl der Ausgleichswülste (107) durch Addieren jeder Strecke, über die die vermehrten Ausgleichswülste (107) so weit ausgedehnt werden, dass sie die plastische Verformung nicht erfahren, bestimmt wird.

4. Schlauchklemme (100) nach Anspruch 1, wobei:
d a s Befestigungsgehäuse (102) ferner ein Befestigungsmittel (120) umfasst, u m zu verhindern, dass der Schlauch (106) durch die Befestigungskraft, die erzeugt wird, wenn der Schlauch (106) festgehalten wird, verformt oder beschädigt wird,
das Befestigungsmittel (120) mit einem Gehäusekörper (121) versehen ist, der gebogen ist, um die Befestigungsschraube (104) aufzunehmen,
eine Befestigungsfläche (122) zur Befestigung an dem Klemmenkörper (101) an der Unterseite des Gehäusekörpers (121) nahtlos ausgeführt ist, um den Schlauch (106) nicht in Bezug au f die Befestigungskraft zu verformen oder zu beschädigen,
ein Festhalteteil (123) zu m Festhalten des Gehäusekörpers (121) mit einem Festhaltevorsprung (125), de r in de r Mitte eines nach unten gerichteten Endabschnitts (124), welcher von der Oberseite des Gehäusekörpers (121) nach unten gebogen ist, nach außen vorspringt und einer Festhalteaussparung (127), die in der Mitte eines nach oben gerichteten Endabschnitts (126), welcher an dem Ende der Befestigungsfläche (122) nach oben gebogen ist, gebildet ist, versehen ist,
das distale Ende (128) des Festhaltevorsprungs (125), das in die Festhalteaussparung (127) freiliegt, nach oben gebogen und daran gepresst ist, und das untere Ende (129) der Festhalteaussparung (127) in einen Raum S geschoben ist, de r durch die Bildung des Festhaltevorsprungs (125) erzeugt ist, und
das distale Ende (128) einen engen Kontakt mit der Außenseite des unteren Endes (129) herstellt, so dass der nach unten gerichtete Endabschnitt (124) eine einheitliche Form mit dem nach oben gerichteten Abschnitt (126) behält.

5. Schlauchklemme nach Anspruch 4, wobei das Befestigungsmittel (120) Festhalteaussparungen (131), die an einem waagerechten Abschnitt (130) bereitgestellt sind, de r ferner vor einer Abwärtsbiegung an der Oberseite des Gehäusekörpers (121) gebildet ist, und Festhaltevorsprünge (132), die zur Kopplung mit den Festhalteaussparungen (131) an dem oberen Ende des nach oben gerichteten Endabschnitts (126) gebildet sind, umfasst, und
die Festhaltevorsprünge (132), die in die Festhalteaussparungen (131) freiliegen, verstemmt sind, damit sie nicht gelöst werden.

## Revendications

1. Collier (100) de tuyau comportant :
un corps (101) de collier formé en courbant un élément élastique en forme de plaque en matériau d'acier inoxydable ;
une vis (104) de serrage dotée d'une tête (103) et couplée à un boîtier (102) de serrage qui est fixé à une extrémité du corps (101) de collier ;
une pluralité de trous (105) de vissage formés vers l'intérieur à l'autre extrémité du corps (101) de collier pour être mis en interaction avec la vis (104) de serrage ; et
un bourrelet (107) de compensation formé d'un seul tenant avec le corps (101) de collier pour immobiliser et serrer fermement un tuyau (106) à un degré qui est réduit à mesure que le diamètre du tuyau (106) diminue du fait d'une utilisation à long terme,
le bourrelet (107) de compensation comprenant en outre un moyen (110) de prévention de déformation plastique servant à empêcher le bourrelet (107) de compensation de ne pas revenir à son état d'origine du fait de la perte de son élasticité par une déformation plastique,
le moyen (110) de prévention de déformation plastique étant muni d'un corps (111) de prévention en contact avec la surface intérieure du corps (101) de collier formé avec le bourrelet (107) de compensation,
**caractérisé en ce qu'**une extrémité du corps (111) de prévention est fixé au corps (101) de collier par l'intermédiaire d'un moyen (112) de fixation,
**en ce que** des goupilles (113, 114) d'arrêt sont installée en nombre égal à celui des bourrelets (107) de compensation à l'emplacement opposé du corps (111) de prévention fixé par l'intermédiaire du moyen (112) de fixation, et
**en ce qu** e les goupilles (113, 114) d'arrêt sont couplées à des trous (115, 116) d'arrêt formés entre les bourrelets (107) de compensation voisins pour limiter la déformation plastique des bourrelets (107) de compensation pendant l'opération de serrage.

2. Collier de tuyau selon la revendication 1, les trous d'arrêt (115) et (116) se présentant sous la forme de trous allongés, de façon à ne pas gêner l'opération d'expansion du bourrelet (107) de compensation lorsque le corps (101) de collier serre le tuyau (106).

3. Collier de tuyau selon la revendication 1, la dimension des trous d'arrêt (115) et (116) étant configurée de telle sorte que le premier trou (115) d'arrêt présente une longueur égale à la distance sur laquelle le premier bourrelet (107) de compensation est élargi au point de ne pas subir la déformation plastique,
le deuxième trou (116) d'arrêt étant formé de façon à présenter une longueur égale à la somme des distances sur lesquelles les premier et deuxième bourrelets (107) de compensation sont tous deux respectivement élargis au point de ne pas subir la déformation plastique, et lorsque le nombre de bourrelets (107) de compensation est accru, la longueur des trous d'arrêt (115) et (116) étant déterminée en additionnant chaque distance sur laquelle les bourrelets (107) de compensation augmentés sont élargis au point de ne pas subir la déformation plastique.

4. Collier (100) de tu y a u selon la revendication 1 :
le boîtier (102) de serrage comprenant en outre un moyen (120) de serrage servant à empêcher le tuyau (106) d'être déformé ou endommagé par la force de serrage créée lorsque le tuyau (106) est immobilisé,
le moyen (120) de serrage étant muni d'un corps (121) de boîtier courbé pour recevoir la vis (104) de serrage,
une surface (122) de serrage appelée à être fixée au corps (101) de collier à la face inférieure du corps (121) de boîtier étant formée suivant un profil sans ininterrompu de façon à ne pas déformer ou endommager le tuyau (106) contre la force de serrage,
une partie (123) d'immobilisation servant à immobiliser le corps (121) de boîtier étant munie d'une protubérance (125) d'immobilisation dépassant vers l'extérieur au centre d'une partie (124) d'extrémité descendante qui est courbée vers le bas par rapport à la face supérieure du corps (121) de boîtier, et d'un évidement (127) d'immobilisation formé au centre d'une partie (126) d'extrémité montante qui est courbée vers le haut à l'extrémité de la surface (122) de serrage,
l'extrémité distale (128) de la protubérance (125) d'immobilisation exposée dans l'évidement (127) d'immobilisation étant courbée vers le haut et comprimée vers celui-ci, et l'extrémité inférieure (129) de l'évidement (127) d'immobilisation étant enfoncée dans un espace S créé par la formation de la protubérance (125) d'immobilisation, et
l'extrémité distale (128) établissant un contact rapproché avec la face extérieure de l'extrémité inférieure (129), de telle sorte que la partie (124) d'extrémité descendante maintienne une forme monobloc avec la partie (126) d'extrémité montante.

5. Collier de tuyau selon la revendication 4, le moyen (120) de serrage comprenant des évidements (131) d'immobilisation pratiqués au niveau d'une partie horizontale (130) qui est en outre formée avant une courbure vers la bas au niveau de la face supérieure du corps (121) de boîtier, et des protubérances (132) d'immobilisation formées à l'extrémité supérieure de la partie (126) d'extrémité montante pour être couplées aux évidements (131) d'immobilisation, et les protubérances (132) d'immobilisation appelées à être exposées dans les évidements (131) d'immobilisation étant matées pour ne pas être désolidarisées.
